# EUROPÄISCHE PATENTSCHRIFT

(11) **EP 1 249 358 B1**
(45) Veröffentlichungstag und Bekanntmachung des Hinweises auf die Patenterteilung: **29.10.2003**
(21) Anmeldenummer: 01109262.4
(22) Anmeldetag: 14.04.2001
(51) Int. Cl.: B60H 1/00, F25B 41/06

(54) **Kombinierte Kälteanlage und Wärmepumpe, inbesondere für den Einsatz zur Heizung und Kühlung des Fahrgastraumes von Kraftfahrzeugen**
Combined refrigeration and heat pump system, particularly for use in the heating and cooling of passenger compartments of vehicles
Système combiné de réfrigération et de pompe à chaleur, en particulier pour être destiné au chauffage et refroidissement d'habitacles de véhicules

(43) Veröffentlichungstag der Anmeldung: 16.10.2002
(73) Patentinhaber: Visteon Global Technologies, Inc., Dearborn, Michigan 48126 (US)
(72) Erfinder: Heyl, Peter, Dr., 50996 Köln (DE)
(74) Vertreter: Heyner, Klaus, Dr.-Ing.

(56) Entgegenhaltungen:
- EP-A- 0 945 290
- DE-C- 19 813 674
- FR-A- 2 780 346

## Beschreibung

Die Erfindung betrifft eine kombinierte Kälteanlage und Wärmepumpe, insbesondere für den Einsatz zur Heizung und Kühlung des Fahrgastraumes von Kraftfahrzeugen wie in FR2780346 offenbart.

Kälteanlagen und Wärmepumpen dienen der Kühlung oder Heizung von Nutzräumen. Die jahreszeitlich verursachten wechselnden klimatischen Bedingungen erfordern häufig ein Heizsystem im Winter und in der Übergangszeit und ein Kühlsystem im Sommer.

Im Stand der Technik sind, über die monofunktionelle Nutzung von Kälteanlagen oder Wärmepumpen hinaus, Kombinationen von diesen bekannt. Beispielsweise für die alternative Heizung oder Kühlung von Nutzräumen, wie Wohn- oder Büroräumen als auch von Lagerräumen oder für die Kühlung und Heizung der Fahrgastzellen von Kraftfahrzeugen.

Letzterer Anwendungsfall verdeutlicht sehr gut die Möglichkeit der Kombination und der gegenseitigen Ergänzung von Kälteanlagen und Wärmepumpen.

Zukünftige Kraftfahrzeugmotoren stellen zwar noch genügend Wärme zur Beheizung der Fahrgastzelle zur Verfügung, jedoch nicht auf dem benötigten Temperaturniveau. Deshalb wurden beispielsweise in einigen Dieselfahrzeugen Zusatzheizsysteme mit Glühkerzen, Widerstandsheizung oder brennstoffbetriebene Brenner vorgesehen.

Dies hängt damit zusammen, dass moderne Verbrennungs- oder Elektromotoren immer weniger Abwärme von zudem geringerer Temperatur erzeugen und somit die für die Fahrgastraumheizung benötigten Wärmemengen nicht auf dem erforderlichen Temperaturniveau zur Verfügung stellen können. Insbesondere im Winter stellt die Kaltstartphase in diesem Zusammenhang ein Problem dar.

Zunehmend werden Kraftfahrzeuge für die Kühlung des Fahrgastraumes im Sommer mit einer Kälteanlage zur Klimatisierung ausgestattet.

Eine weitere Möglichkeit zur Verbesserung der Heizsituation in Kraftfahrzeugen besteht darin, die vorhandene Kälteanlage im Winter als Wärmepumpe zu verwenden.

Aus dem Stand der Technik ist es bekannt, Kälteanlagen und Wärmepumpen für den Einsatz in Kraftfahrzeugen zu kombinieren.

Mittels diverser Absperrorgane und zusätzlicher Verbindungsleitungen ist es möglich, die Funktionen der Wärmeübertrager eines solchen Systems innerhalb und außerhalb der thermischen Bilanzgrenze Fahrgastraum zur Wärmeein- und Auskopplung zu tauschen. Der Wärmeübertrager im Inneren der thermischen Bilanzgrenze Fahrgastraum ist Verdampfer der Kälteanlage und wird im Wärmepumpenbetrieb zum Kondensator/Gaskühler der Wärmepumpe.

Bei der Anlagentechnik besteht im Wesentlichen ein Problem, nämlich das der ökonomischen Vertretbarkeit technisch möglicher Lösungen.

Geht man vom Vorhandensein einer Kälteanlage aus, so ist zum einen die Anzahl der zusätzlich erforderlichen Komponenten für den Wärmepumpenbetrieb so gering wie möglich zu halten und zum anderen sind die Komponenten generell so günstig und multifunktionell wie möglich zu gestalten.

Nach dem Konzept der EP 0 945 290 A2 wird eine Kälteanlage in einem Kraftfahrzeug mit Verbrennungsmotor derart modifiziert, dass mit einem zusätzlichen Abgaswärmeübertrager und zwei zusätzlichen Mehrwegabsperrorganen mit erfindungsgemäßer Verschaltung sowohl ein Kälteanlagen- als auch ein Wärmepumpenbetrieb, abhängig von den Anforderungen an die Temperatur im Inneren des Fahrgastraumes, möglich ist.

Als besonders nachteilig an diesem bekannten Stand der Technik ist festzustellen, dass bei der Lösung nach der EP 0 945 290 A2 für einen kombinierten Kälteanlagen - Wärmepumpenbetrieb eine aufwendige Verschaltung und eine erhebliche Verteuerung der Vorrichtung durch mehrere Mehrwegeventile bzw. Modusweichen und ein kompliziertes, in den verschiedenen Strömungsrichtungen durchströmbares Expansionsventil, oder gar zwei Expansionsventile mit den nötigen Verbindungsleitungen und Absperrorganen notwendig sind.

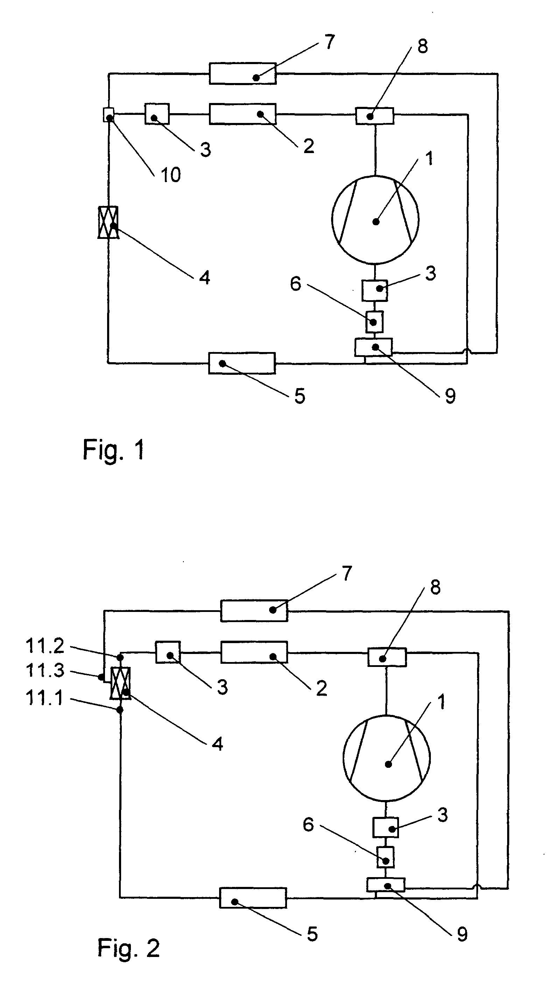

Weiterhin ist im Stand der Technik eine kombinierte Wärmepumpe - Kälteanlage gemäß Fig. 1 bekannt, die als zusätzliche Wärmequelle die Motorabwärme nutzt und dazu einen weiteren Wärmeübertrager aufweist.

In bekannter Weise wird diese Vorrichtung im Kälteanlagenbetrieb wie folgt betrieben. Der Verdichter 1 verdichtet das Kältemittel, dieses gelangt über das entsprechend geschaltete 3-2-Wegeventil 8 in den Außenwärmeübertrager 2, der im Kälteanlagenbetrieb als Kondensator/Gaskühler funktioniert und kondensiert dort. Nach Durchströmen des inneren Wärmeübertragers 3 und des T-Rohrverbindungsstückes 10 wird das Kältemittel im Entspannungsorgan 4 entspannt und gelangt nun in den als Verdampfer arbeitenden Innenwärmeübertrager 5, wo das Kältemittel verdampft und die Fahrgastzelle somit gekühlt wird. Sofern der Verdampfer 5 als überfluteter Verdampfer betrieben wird, ist üblicherweise ein Kältemittelsammler 6 diesem nachgeschaltet. Der Kältemitteldampf durchströmt dann den inneren Wärmeübertrager 3 und wird vom Verdichter 1 erneut komprimiert, der Kreislauf ist geschlossen.

Im Wärmepumpenbetrieb gelangt das Kältemittel über das 3-2-Wegeventil 8 in den, nun als Kondensator/Gaskühler arbeitenden, Innenwärmeübertrager 5 und gibt dort die Kondensationswärme zur Fahrgastzellenheizung ab. Die Entspannung erfolgt wiederum im Entspannungsorgan 4. Das Kältemittel verdampft nun im Glykolwärmeübertrager 7 und der Dampf gelangt über den Kältemittelsammler 6 und den inneren Wärmeübertrager 3 zum Verdichter 1, womit der Kreislauf geschlossen ist.

Ausgehend von diesem Stand der Technik stellt sich weiterhin das Problem, dass neben der Vielzahl aufwendiger Komponenten beim Betrieb der kombinierten Kälteanlage - Wärmepumpe Probleme mit der Kältemittelverteilung in der Anlage auftreten können. Bei beiden Kreisläufen befinden sich Komponenten aktiv im Kreislauf, die nicht durchströmt werden.

Im Wärmepumpenbetrieb ist das der Außenwärmeübertrager 2 und die Hochdruckseite des inneren Wärmeübertragers 3 bzw. im Kälteanlagenbetrieb der Glykolwärmeübertrager 7 sowie die jeweils zugehörigen Kältemittelleitungen. Dies ist auch daraus abzuleiten, dass der Glykolwärmeübertrager 7 und der Außenwärmeübertrager 2 sowie die Hochdruckseite des inneren Wärmeübertragers 3 über das T-Rohrverbindungsstück 10 miteinander verbunden sind und je Schaltung einen nicht genutzten Seitenarm bilden. Im Kälteanlagenbetrieb steht der Glykolwärmeübertrager 7 darüber hinaus unter Hochdruckniveau, was immer einen Risikofaktor darstellt. Wenn die Bereiche nicht abgesperrt sind, reicht ein Sicherheitsventil im Kreislauf aus.

Zudem besteht die Gefahr, dass sich in den gebildeten Seitenarmen jeweils Kältemittel ansammelt und somit dem aktiven Kreislauf vorübergehend "verloren" geht.

Insbesondere, wenn man die Anlage in Wärmepumpenschaltung betreibt, wird sich Kältemittel im Außenwärmeübertrager 7 sammeln und kondensieren. Dieses Kältemittel steht im Kreislauf nun nicht zur Verfügung. Es besteht zwar die Möglichkeit, die Füllmenge zu erhöhen, jedoch ist dies auch aus ökonomischen und sicherheitstechnischen Gründen eine fragwürdige Strategie zur Überwindung dieses Problems.

Es bestünde natürlich die Möglichkeit, an Stelle des T-Rohrverbindungsstückes 10 ein weiteres 3-2-Wegeventil im Kreislauf einzusetzen, doch verteuert diese Maßnahme die Gesamtanlage noch zusätzlich. Darüber hinaus ist auch ein erweiterter Steuerungsaufwand für das Betreiben eines zusätzlichen Mehrwegeventils und ein zusätzliches Sicherheitsventil nötig, da dann dieser Zweig abgesperrt wäre und eine separate Sicherheitseinrichtung notwendig würde.

Davon ausgehend ist es Aufgabe der Erfindung eine kombinierte Kälteanlage und Wärmepumpe, insbesondere für den Einsatz zur Heizung und Kühlung des Fahrgastraumes von Kraftfahrzeugen, konstruktiv einfach auszubilden.

Diese Aufgabe wird erfindungsgemäß durch die Merkmalskombination des Hauptanspruchs gelöst, die Unteransprüche zeigen weitere vorteilhafte Ausgestaltungen der Erfindung.

Die Konzeption der Erfindung besteht darin, dass die kombinierte Kälteanlage und Wärmepumpe ein Entspannungsorgan aufweist, welches sowohl die Funktion eines Entspannungsorgans als auch die Funktion einer Modusweiche bzw. eines 3-2-Wegeventils für den Kälteanlagen oder Wärmepumpenmodus und die Funktion einer Sicherheitseinrichtung erfüllt.

Das erfindungsgemäße Entspannungsorgan weist dazu drei Anschlüsse für Kältemittelleitungen auf und wird je nach Kälteanlagen- oder Wärmepumpenbetrieb von jeweils einer Seite vom Kältemittel bei hohem Druck angeströmt. Je nach Anströmrichtung des Kältemittels werden unterschiedliche Strömungswege freigegeben, wobei die unterschiedlichen Strömungswege durch ein mechanisch wirkendes Kanalelement vorgegeben werden, welches durch den Druck des fließenden Kältemittels selbsttätig in Abhängigkeit der Anströmrichtung zwei Positionen im Entspannungsorgan einnimmt.

In der Position des Kanalelementes im Kälteanlagenmodus befinden sich zwei Anschlüsse der Kältemittelleitungen auf dem niedrigeren Druckniveau, der Glykolwärmeübertrager und der Verdampfer. In diesem Betriebszustand sind alle drei Anschlüsse über das Kanalelement miteinander verbunden.

In der Position des Kanalelementes im Wärmepumpenmodus befindet sich der Anschluss zum Glykolwärmeübertrager auf dem niedrigeren Druckniveau, und der Anschluss zum Außenwärmeübertrager ist abgesperrt.

Der Vorteil der Erfindung besteht darin, dass je nach Strömungsrichtung und damit Betriebsmodus der Anlage die Entspannungsfunktion und die Absperrfunktion bzw. die Druckentlastungsfunktion mit einer Komponente, dem Entspannungsorgan, realisiert wird.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 2: Prinzipschaltbild einer kombinierten Kälteanlage - Wärmepumpe
- Fig. 3:: Entspannungsorgan im Kälteanlagenbetrieb
- Fig. 4:: Entspannungsorgan im Wärmepumpenbetrieb
- Fig. 5:: gesteuertes Entspannungsorgan

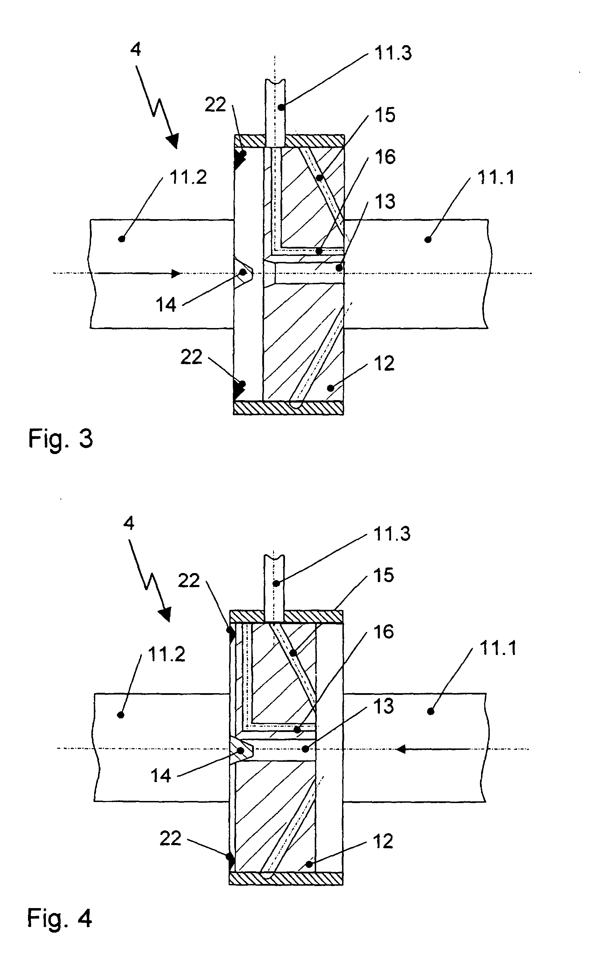

In Fig. 2 ist eine erfindungsgemäße kombinierte Kälteanlage - Wärmepumpe im Prinzipschaltbild dargestellt. Dabei sind die wesentlichen Komponenten bereits bei der Beschreibung des Standes der Technik gemäß Fig. 1 erläutert worden. Die entscheidende Weiterbildung besteht in der Ausführung und Anordnung des Entspannungsorgans 4. Das Entspannungsorgan 4, im Detail in Fig. 3 und Fig. 4 dargestellt, weist drei Anschlüsse 11.1, 11.2, 11.3 für Kältemittelleitungen auf. Je nach der Betriebsweise der Anlage als Kälteanlage oder Wärmepumpe wird das Entspannungsorgan 4 an jeweils einem Anschluss 11.1 oder 11.2 von Kältemittel bei hohem Druck angeströmt. In Abhängigkeit der Betriebsweise werden dabei unterschiedliche Strömungswege für die Entspannung des Kältemittels im Entspannungsorgan 4 freigegeben.

Nach einer bevorzugten Ausführungsform der Erfindung enthält das Entspannungsorgan 4 ein mechanisch wirkendes Kanalelement 12 mit Kältemittelkanälen gemäß Fig. 3 und Fig. 4.

Das Kanalelement 12 weist vorteilhaft als Kältemittelkanäle einen oder mehrere Drosselkanäle 13 und mindestens einen Druckentlastungskanal 16 für den Kälteanlagenbetrieb sowie mindestens einen Drosselkanal 15 für den Wärmepumpenbetrieb auf.

Im Wärmepumpenbetrieb wird durch die Stellung des Kanalelements 12 der Zugang zum Außenwärmeübertrager 2 abgesperrt.

Dazu wird als Absperrmittel für den Drosselkanal 13 ein Absperrkonus 14 erfindungsgemäß am Entspannungsorgan 4 vorgesehen, welcher den Drosselkanal 13 im Wärmepumpenbetrieb verschließt.

Ein Durchfluss bzw. Nachströmen von Kältemittel in den Außenwärmeübertrager 2 hinein wird so verhindert.

Steigt auf Grund unvorhergesehener Umstände der Druck im Außenwärmeübertrager 2 unzulässig an, wird sich das Kanalelement 12 gemäß Fig. 4 so lange nach rechts bewegen und den abgesperrten Seitenarm öffnen, bis der Druck wieder auf das Hochdruckniveau gesunken ist,und dabei wird Kältemittel in den Kreislauf abgeben. Dies ist möglich, da bei gleichen Flächenverhältnissen sich das Kanalelement 12 des Entspannungsorgans 4 auf Grund des resultierenden Druckverhältnisses verschiebt. Um die druckausgleichende Wirkung durch das Flächenverhältnis zu bewirken, werden beispielsweise Abstandshalter 22 am Gehäuse des Entspannungsorgans 4 in Form einer Wulst oder kegelartigen Erhebungen vorgesehen. Somit erfüllt die erfindungsgemäße Lösung auch die Funktion einer Sicherungseinrichtung gegen Überdruck im abgesperrten Seitenarm.

Nach dem Abschalten der Anlage im Wärmepumpenbetrieb wird sich das Kältemittel stets am kältesten Ort, dem Außenwärmeübertrager 2, sammeln.

Um im wiederholten Wärmepumpenbetrieb die gesamte Kältemittelmenge zur Verfügung zu haben, kann die Anlage zunächst im Kälteanlagenbetrieb betrieben werden.
Der Außenwärmeübertrager 2 wird dabei erwärmt,und das Kältemittel verlagert sich in den Innenwärmeübertrager 5 bzw. in die restliche Anlage. Dieses Vorgehen ist in der Regelstrategie der Anlage vorzusehen.

Im Kälteanlagenbetrieb besteht das gleiche Problem mit dem Glykolwärmeübertrager 7. In diesem Fall befindet sich das Kältemittel erfindungsgemäß jedoch unter Niederdruck im Glykolwärmeübertrager 7. Wird ein Kältemittelmangel festgestellt, kann durch das Durchströmen des Glykolwärmeübertragers 7 mit heißem Glykol vom Motor (peripherer, nicht dargestellter Kreislauf) das Kältemittel erwärmt werden und dieses strömt daraufhin in den aktiven Kreislauf zurück. Darüber hinaus ist der Glykolwärmeübertrager 7 nicht von der Anlage abgesperrt. Um dies zu realisieren, wurde über den Druckentlastungskanal 16 eine ständige Verbindung des Glykolwärmeübertragers 7 mit der restlichen Anlage bei Verdampfungsdruckniveau vorgesehen. Hierdurch wird in diesem Anlagenteil die Sicherheit durch das niedrigere Druckniveau während des Kälteanlagenbetriebes deutlich erhöht.

Dieser Umstand ist besonders von Belang, wenn als Kältemittel Kohlendioxid in der kombinierten Kälteanlage - Wärmepumpe eingesetzt wird.

Um eine sichere Funktion der Anlage zu gewährleisten, wird das Kanalelement 12 im Entspannungsorgan 4 bewegbar ausgebildet. Es nimmt durch den Druck des fließenden Kältemittels selbsttätig in Abhängigkeit der Anströmrichtung zwei Positionen im Entspannungsorgan 4 ein.

Das Kanalelement 12 im Entspannungsorgan 4 wird bei der Bewegung von einer Position in die andere nach dem Wechsel der Strömungsrichtung des Kältemittels mechanisch, zum Beispiel über Nuten und korrespondierende Eingriffe geführt, um ein Verklemmen oder Verkanten des Kanalelements 12 zu verhindern.

Im Kälteanlagenbetrieb befinden sich die Kältemittelanschlüsse 11.1, 11.3 und im Wärmepumpenbetrieb der Kältemittelanschluss 11.3 auf dem Verdampfungsdruckniveau. Im Wärmepumpenbetrieb ist der Kältemittelanschluss 11.2, wie bereit beschrieben, über den Absperrkonus 14 am Entspannungsorgan 4 abgesperrt.

Insbesondere für den Einsatz von Kohlendioxid als Kältemittel ist es für den kombinierten Kälteanlagen - Wärmepumpenbetrieb vorteilhaft, unterschiedliche Drosselquerschnitte zu verwenden. Dies wird auf einfache Weise mit der erfindungsgemäßen Lösung möglich. Die Drosselkanäle 13 und 15 im Kanalelement 12 des Entspannungsorgans 4 sind dazu mit einer unterschiedlichen durchströmbaren Querschnittsfläche ausgebildet. Hierdurch wird eine Anpassung der unterschiedlichen Dichteverhältnisse des Kältemittels in den jeweiligen Betriebsweisen möglich.

Die Kältemittelkanäle selbst im Kanalelement 12 sind bevorzugt mit kreisförmigem Querschnitt ausgebildet und verlaufen je nach den geometrischen Gegebenheiten geradlinig, bogenförmig oder spiralförmig im Kanalelement 12.

Weiterhin ist es von Vorteil, dass das Entspannungsorgan 4 mit verschiedenen Kanalelementen 12 an den Einsatz in Kältemittelkreisläufen mit unterschiedlichen Kältemitteln, wie beispielsweise Kohlendioxid, R134a oder R290 anpassbar ist.

Der Einsatz des erfindungsgemäßen Entspannungsorgans ist über den mobilen Anwendungsfall des Einsatzes in Kraftfahrzeugen hinaus auch für stationäre Anlagen vorteilhaft.

Nach einer weiteren bevorzugten Ausführungsform der Erfindung werden die Schaltpositionen für die Kälteanlagen oder Wärmepumpenbetriebsart mit einem elektronisch geregelten oder gesteuerten Entspannungsorgan 17 realisiert.

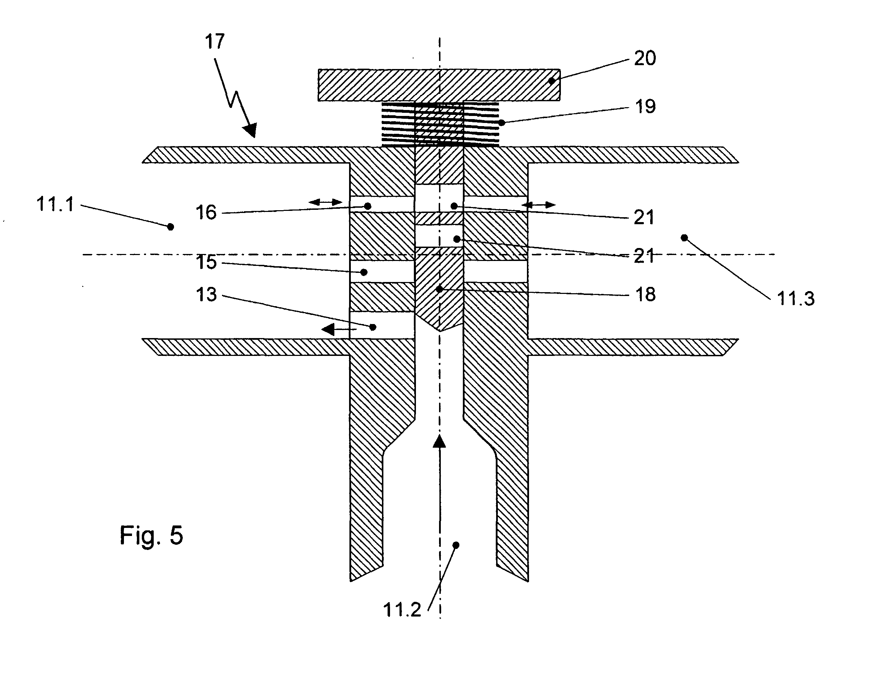

In Fig. 5 ist ein elektro-mechanisches Entspannungsorgan 17 im Querschnitt dargestellt. Das Ventilelement 18 ist derart gestaltet, dass es mehrere Wege des Kältemittels ermöglicht. In der abgebildeten Stellung befindet sich das Entspannungsorgan 17 in der Stellung für den Kälteanlagenbetrieb. Das Kältemittel liegt bei hohem Druck am Kältemittelanschluss 11.2 an und strömt über den Drosselkanal 13 zum Kältemittelanschluss 11.1, wo es in den als Verdampfer arbeitenden Innenwärmeübertrager 5 weitergeleitet wird. Über die Stellung des Ventilelements 18 wird erreicht, dass erfindungsgemäß gleichzeitig die Drosselung des Kältemittels über den Drosselkanal 13 erfolgt und dass sich dabei auch der Kältemittelanschluss 11.3 zum Glykolwärmeübertrager 7 hin über den Druckentlastungskanal 16 auf dem niedrigeren Druckniveau befindet. Dies wird über ein im Ventilelement 18 eingearbeiteten Durchgang 21 erreicht, der in der Ventilstellung im Kälteanlagenbetrieb einen Teil des Druckentlastungskanals 16 bildet.

Im nicht dargestellten Wärmepumpenbetrieb wird das Ventilelement 18 beispielsweise über einen elektromechanischen Antrieb nach unten bewegt. Dabei wird der Drosselkanal 15 im Wärmepumpenbetrieb über einen Durchgang 21 verbunden und der Druckentlastungskanal 16 sowie der Drosselkanal 13 für den Kälteanlagenbetrieb gleichzeitig geschlossen.

Der Antrieb 20 des Entspannungsorgans 17 erfolgt dabei über einen Motor oder eine Spule. Ebenso erfindungsgemäß ist eine elektronische Ansteuerung des Ventilelements 18. Die Rückstellkraft für das Ventilelement 18 wird im Ausführungsbeispiel gemäß Fig. 5 über eine Feder 19 bereitgestellt.

Im Falle eines zu hohen Druckes im abgesperrten Arm 11.2 beim Wärmepumpenbetrieb wirkt das Ventilelement 18 über die Feder 19 druckentlastend, indem das Ventilelement 18 hochgedrückt wird und den Drosselkanal 13 zur Druckentlastung freigibt. Bei Verwendung von Kohlendioxid als Kältemittel wird die Feder 19 beispielsweise so eingestellt, dass bei einem Druck von 140 bar das Ventilelement 18 hochgedrückt wird und so der abgesperrte Seitenarm zur Druckentlastung freigegeben wird.

### LISTE DER BEZUGSZEICHEN

- 1: Verdichter
- 2: Außenwärmeübertrager
- 3: innerer Wärmeübertrager
- 4: Entspannungsorgan
- 5: Innenwärmeübertrager
- 6: Kältemittelsammler
- 7: Glykolwärmeübertrager
- 8: 3-2-Wegeventil
- 9: 3-2-Wegeventil
- 10: T-Rohrverbindungsstück
- 11.1: Kältemittelanschluss
- 11.2: Kältemittelanschluss
- 11.3: Kältemittelanschluss
- 12: Kanalelement
- 13: Drosselkanal im Kälteanlagenbetrieb
- 14: Absperrkonus
- 15: Drosselkanal im Wärmepumpenbetrieb
- 16: Druckentlastungskanal
- 17: regelbares Entspannungsorgan
- 18: Ventilelement
- 19: Feder
- 20: Antrieb
- 21: Durchgänge
- 22: Abstandshalter

## Patentansprüche

1. Kombinierte Kälteanlage und Wärmepumpe, insbesondere für den Einsatz zur Heizung und Kühlung des Fahrgastraumes von Kraftfahrzeugen, **dadurch gekennzeichnet, dass** ein Entspannungsorgan (4, 17) vorgesehen ist, welches drei Anschlüsse (11.1, 11.2, 11.3) für Kältemittelleitungen aufweist und welches je nach Betriebsweise an jeweils einem ersten Anschluss (11.1) oder einem zweiten Auschluss (11.2) von Kältemittel bei hohem Druck angeströmt wird und dass je nach Betriebsweise unterschiedliche Strömungswege für die Entspannung des Kältemittels im Entspannungsorgan (4) freigegeben werden.

2. Kombinierte Kälteanlage und Wärmepumpe nach Anspruch 1, **dadurch gekennzeichnet, dass** das Entspannungsorgan (4) ein mechanisch wirkendes Kanalelement (12) mit Kältemittelkanälen enthält.

3. Kombinierte Kälteanlage und Wärmepumpe nach Anspruch 2, **dadurch gekennzeichnet, dass** das Kanalelement (12) als Kältemittelkanäle mindestens einen Drosselkanal (13) und mindestens einen Druckentlastungskanal (16) für den Kälteanlagenbetrieb sowie mindestens einen Drosselkanal (15) für den Wärmepumpenbetrieb aufweist und dass Absperrmittel am Entspannungsorgan (4) vorgesehen sind, die den Drosselkanal (13) im Wärmepumpenbetrieb verschließen.

4. Kombinierte Kälteanlage und Wärmepumpe nach Anspruch 3, **dadurch gekennzeichnet, dass** als Absperrmittel ein Absperrkonus (14) am Entspannungsorgan (4) vorgesehen ist.

5. Kombinierte Kälteanlage und Wärmepumpe nach einem der Ansprüche 2 bis 4, **dadurch gekennzeichnet, dass** das Kanalelement (12) im Entspannungsorgan (4) bewegbar ausgebildet ist und durch den Druck des fließenden Kältemittels selbsttätig in Abhängigkeit der Anströmrichtung zwei Positionen im Entspannungsorgan (4) einnimmt und dass sich dabei im Kälteanlagenbetrieb die Kältemittelanschlüsse (11.1, 11.3) und im Wärmepumpenbetrieb der Kältemittelanschluss (11.3) auf dem Verdampfungsdruckniveau befinden und dass im Wärmepumpenbetrieb der Kältemittelanschluss (11.2) abgesperrt ist.

6. Kombinierte Kälteanlage und Wärmepumpe nach einem der Ansprüche 3 bis 4, **dadurch gekennzeichnet, dass** die Drosselkanäle (13) und (15) im Kanalelement (12) eine unterschiedliche durchströmbare Querschnittsfläche aufweisen.

7. Kombinierte Kälteanlage und Wärmepumpe nach einem der Ansprüche 2 bis 6, **dadurch gekennzeichnet, dass** das Entspannungsorgan (4) mit verschiedenen Kanalelementen (12) an den Einsatz in Kältemittelkreisläufen mit unterschiedlichen Kältemitteln, wie beispielsweise Kohlendioxid, R134a oder R290 anpassbar und in stationären oder mobilen Anlagen einsetzbar ist.

8. Kombinierte Kälteanlage und Wärmepumpe nach einem der Ansprüche 2 bis 7, **dadurch gekennzeichnet, dass** die Kältemittelkanäle in dem Kanalelement (12) kreisförmige Querschnitte aufweisen und dass die Kältemittelkanäle geradlinig, bogenförmig oder spiralförmig ausgebildet sind.

9. Kombinierte Kälteanlage und Wärmepumpe nach Anspruch 1, **dadurch gekennzeichnet, dass** ein elektro-mechanisches Entspannungsorgan (17) vorgesehen ist, welches ein Ventilelement (18) mit Durchgängen (21) aufweist, und dass über die Stellung des Ventilelements (18) im Kälteanlagenbetrieb die Drosselung des Kältemittels über einen Drosselkanal (13) erfolgt und dass sich dabei auch der Kältemittelanschluss (11.3) zu einem Glykolwärmeübertrager (7) hin über einen Druckentlastungskanal (16) auf dem niedrigeren Druckniveau befindet, wobei dazu im Ventilelement (18) mindestens ein Durchgang (21) vorhanden ist, der in der Ventilstellung im Kälteanlagenbetrieb einen Teil des Druckentlastungskanals (16) bildet und dass im Wärmepumpenbetrieb einer Drosselkanal (15) über einen Durchgang (21) im Ventilelement (18) geschaltet wird und dass dabei der Druckentlastungskanal (16) sowie der Drosselkanal (13) für den Kälteanlagenbetrieb gleichzeitig geschlossen sind.

10. Kombinierte Kälteanlage und Wärmepumpe nach Anspruch 9, **dadurch gekennzeichnet, dass** das Entspannungsorgan (17) als Antrieb (20) für das Ventilelement (18) einen Motor oder eine Spule aufweist.

11. Kombinierte Kälteanlage und Wärmepumpe nach Anspruch 9 oder 10, **dadurch gekennzeichnet, dass** das Entspannungsorgan (17) eine Feder (19) aufweist, welche die Rückstellkraft für das Ventilelement (18) aufbringt.

12. Arbeitsverfahren zum Betrieb einer kombinierten Kälteanlage und Wärmepumpe nach einem der Ansprüche 1 bis 11 **dadurch gekennzeichnet, dass** im wiederholten Wärmepumpenbetrieb die kombinierten Kälteanlage und Wärmepumpe zunächst im Kälteanlagenbetrieb betrieben wird, wobei sich einer Außenwärmeübertrager (2) dabei erwärmt und das Kältemittel aus diesem in einen Innenwärmeübertrager (5) bzw. in die restliche Anlage verlagert wird.

13. Arbeitsverfahren zum Betrieb einer kombinierten Kälteanlage und Wärmepumpe nach einem der Ansprüche 1 bis 12 **dadurch gekennzeichnet, dass** im Kälteanlagenbetrieb das Kältemittel aus einen Glykolwärmeübertrager (7) durch das Durchströmen des Glykolwärmeübertragers (7) mit heißem Glykol einem Motor erwärmt und in einen aktiven Kreislauf zurückgegeben wird, wobei der Glykolwärmeübertrager (7) über einen Druckentlastungskanal (16) mit der restlichen Anlage bei Verdampfungsdruckniveau in Verbindung steht.

## Claims

1. Combined cooling plant and heat pump, especially for the heating and cooling of the passenger cells of motor vehicles, **characterized in that** a decompression device (4, 17) is provided which has three connections (11.1, 11.2, 11.3) for coolant conduits and is entered dependent on the operational mode at one first connection (11.1) or one second connection (11.2) in each case by high-pressure coolant, and that dependent on the operational mode different flow paths for the decompression of the coolant in the decompression device (4) are released.

2. Combined cooling plant and heat pump to Claim 1 **characterized in that** the decompression device (4) contains a mechanically acting channel element (12) with coolant channels.

3. Combined cooling plant and heat pump to Claim 2 **characterized in that** the channel element (12) has as coolant channels at least one restriction channel (13) and at least one pressure relief channel (16) for the cooling plant operational mode, and at least one pressure relief channel (16) for the heat pump operational mode, and that blocking elements at the decompression device (4) are provided which block the restriction channel (13) in heat pump operational mode.

4. Combined cooling plant and heat pump to Claim 3 **characterized in that** as the blocking element a blocking cone (14) at the decompression device (4) is provided.

5. Combined cooling plant and heat pump to any of the Claims 2 to 4 **characterized in that** the channel element (12) in the decompression device (4) is designed movable and due to the pressure of the flowing coolant, automatically takes two positions in the decompression device (4) dependent on the direction of the coolant's flow and that hereby in cooling plant operational mode the coolant connections (11.1, 11.3) and in heat pump operational mode the coolant connection (11.3) are at the evaporation pressure level and that in heat pump operational mode the coolant connection (11.2) is blocked.

6. Combined cooling plant and heat pump to any of the Claims 3 to 4 **characterized in that** the restriction channels (13) and (15) in the channel element (12) have a varying passable cross-sectional area.

7. Combined cooling plant and heat pump to any of the Claims 2 to 6 c**haracterized in that** the decompression device (4) can be adapted to the use in coolant circuits with different coolants, such as carbon dioxide, R134a or R290 and can be used in stationary or mobile plants.

8. Combined cooling plant and heat pump to any of the Claims 2 to 7 **characterized in that** the coolant channels in the channel element (12) have circular cross-sections and that the coolant channels are designed linear, curved or helical.

9. Combined cooling plant and heat pump to Claim 1 **characterized in that** an electro-mechanical decompression device (17) is provided which has a valve element (18) with passages (21) and that due to the position of the valve element (18) in cooling plant operational mode restriction of the coolant takes place through a restriction channel (13) and that hereby also the coolant connection (11.3) to one glycol heat exchanger (7) through one pressure relief channel (16) is at the low pressure level, whereby for that in the valve element (18) at least one passage (21) exists which in the valve position in cooling plant operational mode forms part of the pressure relief channel (16) and that in heat pump operational mode one restriction channel (15) is switched over a passage (21) in the valve element (18) and that thereby the pressure relief channel (16) and the restriction channel (13) for cooling plant operational mode are closed at the same time.

10. Combined cooling plant and heat pump to Claim 9 **characterized in that** the decompression device (17) has a motor or a coil as a drive (20) for the valve element (18).

11. Combined cooling plant and heat pump to Claim 9 or 10 **characterized in that** the decompression device (17) has a spring (19) which delivers the force to reset the valve element (18).

12. Method to operate a combined cooling plant and heat pump to any of the Claims 1 to 11 **characterized in that** in repeated heat pump operational modes the combined cooling plant and heat pump is first operated in cooling plant operational mode, whereby one outside heat exchanger (2) is heated and the coolant is transported from it into one inside heat exchanger (5) or into the rest of the device, respectively.

13. Method to operate a combined cooling plant and heat pump to any of the Claims 1 to 12 **characterized in that** in cooling plant operational mode the coolant within one glycol heat exchanger (7) is heated due to the passage of hot glycol from one engine through the glycol heat exchanger (7) and given back to one active circuit, whereby the glycol heat exchanger (7) is connected to the rest of the device at evaporation pressure level via one pressure relief channel (16).

## Revendications

1. Système combiné de réfrigération et de pompe à chaleur, en particulier pour être destiné au chauffage et refroidissement d'habitacles de véhicules, **caractérisé en ce qu'**il est prévu un organe de détente (4, 17) lequel présente trois raccordements (11.1 11.2, 11.3) pour des lignes de frigorigène, celui-ci affluant, suivant le mode de fonctionnement, soit vers un premier raccordement (11.1), soit vers un deuxième raccordement (11.2) de frigorigène, à pression élevée, et **en ce que**, suivant le mode de fonctionnement, différentes voies d'écoulement sont libérées pour la détente du frigorigène dans l'organe de détente (4).

2. Système combiné de réfrigération et de pompe à chaleur selon la revendication 1, **caractérisé en ce que** l'organe de détente (4) comprend un élément de canalisation (12), agissant mécaniquement, avec des canalisations de frigorigène.

3. Système combiné de réfrigération et de pompe à chaleur selon la revendication 2, **caractérisé en ce que** l'élément de canalisation (12), en tant que canalisations de frigorigène, présente au moins une canalisation d'étranglement (13), au moins une canalisation de décharge (16) pour le fonctionnement du système de réfrigération, et au moins une canalisation d'étranglement (15) pour le fonctionnement de la pompe à chaleur, et **en ce que** des moyens d'arrêt, obturant la canalisation d'étranglement (13) lorsque la pompe à chaleur est en marche, sont prévus au niveau de l'organe de détente (4).

4. Système combiné de réfrigération et de pompe à chaleur selon la revendication 3, **caractérisé en ce qu'**il est prévu, comme moyen d'arrêt, un cône d'obturation (14) au niveau de l'organe de détente (4).

5. Système combiné de réfrigération et de pompe à chaleur selon l'une quelconque des revendications 2 à 4, **caractérisé en ce que** l'élément de canalisation (12), est conçu de façon mobile dans l'organe de détente (4), qu'il accepte, automatiquement, en fonction du sens du flux, deux positions dans l'organe de détente (4) par la pression du frigorigène s'écoulant, qu'à l'occasion, les raccordements de frigorigène (11.1, 11.3), pendant le fonctionnement du système de réfrigération, et le raccordement de frigorigène (11.3), pompe à chaleur en marche, sont à la pression d'évaporation, et que le raccordement de frigorigène (11.2), pompe à chaleur en marche, est obturé.

6. Système combiné de réfrigération et de pompe à chaleur selon l'une quelconque des revendications 3 à 4, **caractérisé en ce que** les canalisations d'étranglement (13) et (15), dans l'élément de canalisation (12), présentent une superficie de section traversable différente.

7. Système combiné de réfrigération et de pompe à chaleur selon l'une quelconque des revendications 2 à 6, **caractérisé en ce que** l'organe de détente (4) peut être adapté, avec des éléments de canalisation (12) différents, à l'emploi, dans des circuits de frigorigènes, de différents frigorigènes tels que, par exemple, le dioxyde de carbone, le R134a ou le R290 et utilisé dans des installations fixes ou mobiles.

8. Système combiné de réfrigération et de pompe à chaleur selon l'une quelconque des revendications 2 à 7, **caractérisé en ce que** les canalisations de frigorigène présentent, dans l'élément de canalisation (12), des sections circulaires et **en ce que** les canalisations de frigorigène sont rectilignes, cintrées ou hélicoïdales.

9. Système combiné de réfrigération et de pompe à chaleur selon la revendication 1, **caractérisé en ce qu'**un organe de détente électromécanique (17) est prévu, lequel présente un élément de soupape (18) avec des passages (21), que le réglage de l'élément de soupape (18) permet, lorsque le système de réfrigération fonctionne, de freiner le frigorigène au moyen d'une canalisation d'étranglement (13) et qu'à l'occasion, le raccordement de frigorigène (11.3) via un échangeur thermique glycolique (7) au moyen d'une canalisation de décharge (16), est également au niveau bas de pression, sachant qu'il est prévu, à cet effet, dans l'élément de soupape (18) au moins un passage (21), formant une partie de la canalisation de décharge (16) dans le réglage de la soupape, système de réfrigération en marche, qu'une canalisation d'étranglement (15), lorsque la pompe à chaleur est en marche, est commutée sur un passage (21) dans l'élément de soupape (18) et que, ce faisant, la canalisation de décharge (16) et la canalisation d'étranglement (13) sont obturées en même temps pour le fonctionnement du système de réfrigération.

10. Système combiné de réfrigération et de pompe à chaleur selon la revendication 9, **caractérisé en ce que** l'organe de détente (17), en tant que commande (20) pour l'élément de soupape (18), présente un moteur ou une bobine.

11. Système combiné de réfrigération et de pompe à chaleur selon la revendication 9 ou 10, **caractérisé en ce que** l'organe de détente (17) présente un ressort (19) qui applique une force de rappel pour l'élément de soupape (18).

12. Procédé destiné au fonctionnement d'un système combiné de réfrigération et de pompe à chaleur selon l'une quelconque des revendications 1 à 11, **caractérisé en ce qu'**en fonctionnement répété de la pompe à chaleur, le système combiné de réfrigération et de pompe à chaleur fonctionne tout d'abord en mode réfrigération, sachant qu'un échangeur thermique externe (2) monte en température à l'occasion et que le frigorigène issu de ce dernier est transféré dans un échangeur thermique interne (5) ou dans le reste du système.

13. Procédé destiné au fonctionnement d'un système combiné de réfrigération et de pompe à chaleur selon l'une quelconque des revendications 1 à 12, **caractérisé en ce qu'**en mode de réfrigération, le frigorigène provenant d'un échangeur thermique glycolique (7) est réchauffé par un moteur avec du glycol chaud en traversant l'échangeur thermique glycolique (7) et **en ce que** le frigorigène est restitué dans un circuit actif, sachant que l'échangeur thermique glycolique (7) communique avec le reste du système au moyen d'une canalisation de décharge (16) à la pression d'évaporation.
